# EUROPEAN PATENT APPLICATION

(11) **EP 3 404 941 A1**
(43) Date of publication of application: **21.11.2018**
(21) Application number: 17305572.4
(22) Date of filing: 17.05.2017
(51) Int. Cl.: H04W 4/06, H04W 28/08, H04L 29/06

(54) **ADAPTIVE PUSH SERVICE FUNCTIONALITIES**

(71) Applicant: TDF, 92120 Montrouge (FR); Rai Radiotelevisione Italiana S.p.A., 00195 Roma (IT)
(72) Inventor: ILSEN, Stefan, 38106 Braunschweig (DE)
(74) Representative: Cabinet Plasseraud

(57) **Abstract**

The invention relates to a method for transmitting push service data to at least one user equipment in a network comprising a broadcast layer dedicated to transmission of at least one broadcast service and another layer dedicated to transmission of at least one unicast or broadcast service, comprising :
- receiving data relating to a network use of the network (S12);
- determining to perform a transmission of the push service data based on the received data (S13);
- sending instructions to a network entity, said instructions instruct to perform a transmission of the push service data via the broadcast layer, to the at least one user equipment to be stored thereon (S14).

## Description

The present invention generally relates to the transmission of data in a telecommunications network in particular in the context of a hybrid broadcast/unicast network.

It finds application, in particular while not exclusively, in systems that enable to offload data from cellular network, such as an LTE mobile network, in particular LTE-Advanced, which is initially dedicated to unicast services, through an existing broadcast network. Such networks aim in particular at relieving mobile networks by offloading popular contents, such as video contents, to existing High Tower, High Power (HTHP) transmitters of broadcast networks. This system is hereafter called Tower Overlay over LTE-Advanced+, TOoL+.

Within the framework of the present invention, a hybrid broadcast/unicast network encompasses any network or network system that comprises at least one broadcast layer and at least one unicast layer.

LTE-Advanced describes the latest evolution of cellular transmission standards developed by the 3GPP (Third Generation Partnership Project).

However, the load or usage of mobile networks increases especially due to the transmission of popular content like videos. These networks are especially affected during day time, when the consumption of these popular contents is at its highest.

To overcome these issues, classical networks are usually designed to absorb the load peaks of the network, which has for consequence to have networks that are underused the remaining time, like during night hours.

The present invention aims at improving the situation.

A first aspect of the invention concerns a method implemented by computer means for transmitting push service data to at least one user equipment in a network comprising a broadcast layer dedicated to transmission of at least one broadcast service and another layer dedicated to transmission of at least one unicast or broadcast service, comprising :
- receiving data relating to a network use of the network;
- determining to perform a transmission of the push service data based on the received data;
- sending instructions to a network entity, said instructions instruct to perform a transmission of the push service data via the broadcast layer, to the at least one user equipment to be stored thereon.

The present invention enables to send data, using a broadcast layer, to be stored on the user equipments which are in the coverage zone of a broadcast network which provides a broadcast layer. Push service data, according to the invention, relates to data sent via a push service, that is, to data sent by the network to the user equipment without being directly requested by the user equipment. The data transmission mode therefore depends on the network use, contrary to usual transmission of data sent in response to a request of the user equipment. The push service, which is triggered depending on data relating to the network use, enables to send data when it is more suitable, for example when the network is not highly loaded.

When many user equipments are involved, which can be achieved by using a broadcast transmission, it is likely that at least one of the user equipment will consume the push service data so that the offload of the network during a specific period (period highly loaded, day time...) is more effective. Thus the invention enables to send data while optimizing the use of the network resources.

The broadcast layer can be a layer provided by a dedicated broadcast network or a layer of a mobile network like a LTE-Advanced network. The broadcast layer and the other layer of the network can be part of the same network or part of different networks. Therefore, the network can encompass a single network providing the broadcast layer and the other layer, or can encompass a network system comprising networks respectively dedicated to the broadcast layer and to the other layer.

The decision entity, that is the entity which determines to perform the transmission of the push service data, and the network entity can be separate, as they can belong to different networks. For example, the decision entity may be an entity of a mobile network, such as a LTE-Advanced network, whereas the network entity may belong to a network dedicated to broadcast transmission and can therefore control the transmitter of the dedicated broadcast network for example the HTHP transmitter. In that case, the network comprises a dedicated broadcast network and a LTE-Advanced network. Alternatively, the decision entity and the network entity can belong to one and the same network.

Alternatively to the embodiments where instructions sent to a network entity instruct to perform a transmission via the broadcast layer, the decision entity can instruct to perform a transmission via the other layer depending on the received data relating to a network use. Therefore the method further comprises selecting a layer among the broadcast layer and the other layer based at least on the data relating to a network use. In addition, the instructions sent to the network, instruct to perform a transmission via the selected layer.

Alternatively, the push service data may be transmitted via a unicast layer, for example a unicast layer of a LTE-Advanced network. Therefore, the push service data is transmitted to each user equipment in a unicast transmission. This alternative may be relevant in the case where the broadcast layer is limited in favor to a unicast layer. For example the eMBMS layer of a LTE-Advanced network is limited. In practice only up to 60% of the available LTE-Advanced resources can be reserved for eMBMS services. Therefore, the unicast layer of LTE-Advanced network can be combined with the eMBMS layer if necessary.

According to some embodiments of the invention, the data relating to a network use may include data related to a load of the broadcast layer, to a load of said another layer or to the time of the day. This enables to optimize as a whole the load of the network. Indeed, this enables to determine whether to perform or not the transmission of the push service data based on this specific information. For example, this enables to instruct to perform a transmission, via the broadcast layer, only when the load of the broadcast layer is under a threshold or/and when the load of the other layer is above another threshold. This may also enable to select the layer among the broadcast layer and the other layer based at least on this information. For example, selecting systematically the broadcast layer when the load of the broadcast layer is under a threshold independently of the load of other layer, selecting the other layer when the load of broadcast layer is above this threshold and the load of the other layer is under another threshold.

As explained above, the data relating to a network use may be data related to the time of the day. For example, the decision entity determines according to a predetermined timetable and the data related to the time of the day, whether or not to perform the transmission of the push service data. The timetable may include the periods of the day during which it is more relevant to send the push service data, for example during nigh time when energy is less expensive.

According to some embodiments of the invention the method may further comprise:
- assessing a number of requests for a given content from several user equipments over the other layer, the other layer being dedicated to transmission of at least one unicast service;
- if said number is above a predetermined threshold, selecting said given content as said push service data.

This enables to optimize the efficiency of the method. Indeed, by selecting a content which has been previously requested, and which is therefore popular, the relevancy of the push service data is increased, thereby increasing the efficiency of the overall network. Therefore, this aspect of the invention enables to measure if the content is or will be a popular content, that is, that the content is likely to be a highly requested content. If the content is a popular content then it can be determined as the push service data that can be sent according to the method.

According to some embodiments of the invention, the instructions may further instruct to perform a periodical retransmission of said push service data. This enables to reduce or avoid the fact that the push service data is not received by the user equipments which are in the coverage of the broadcast layer. Indeed, when transmitting data through the broadcast layer there may be no feedback from the user equipment on whether or not the data has been effectively received and properly decoded by it. Therefore, by retransmitting periodically the push service data, the method reduces the push service data sent which are not successfully stored. The frequency of retransmission can be set based on the data relating to a network use.

According to some embodiments of the invention, adapting instructions are sent to the network entity, those instructions instruct to adapt the periodical retransmission based on further data relating to the network use. This enables to adapt the frequency of the retransmission according to the evolution of the network use. For example, when receiving further data relating to the network use which, for instance, includes a load value of the broadcast layer, this load value being above a previous load value previously received in the data relating to the network use, an adapting instruction is sent to the network entity to reduce the frequency of the retransmission. A threshold can be defined, above which the retransmissions are paused. Alternatively, several thresholds can be predefined as delimiting respectively several levels, each level being associated with a frequency of retransmission. Depending on the corresponding level of the load of the broadcast layer, a frequency of the periodical retransmission is determined.

According to some embodiments of the invention, the instructions or the adapting instructions further instruct a level of modulation and coding scheme to be used for said transmission or for said retransmission, the modulation and coding scheme being instructed, by instructions or the adapting instructions, based on the data relating to the network use or on the further data relating to the network use, respectively.

This enables to adapt the transmission parameters according to data relating to the network use. For example, if the broadcast layer is lightly loaded, it is possible to set a more robust modulation and coding scheme for the transmission via the broadcast layer. Therefore, enabling:
- to reduce or avoid that the push service data is not received by the user equipment;
- to extend the coverage area; or
- to achieve better indoor penetration.

To achieve this, the modulation scheme or the Forward Error Correction (FEC) can be changed independently or they can be simultaneously modified. To that end a modulation scheme with a lower number of bits per symbol can be set or a Forward Error Correction (FEC) with a lower code rate. In contrary, if the data relating to a network use indicates for example a high cost of energy (day time) the transmission parameters can be adapted, by setting a modulation scheme with a higher number of bits per symbol or a Forward Error Correction (FEC) with a higher code rate. Indeed, a highly robust modulation and coding scheme (low number of bits per symbol and low code rate) requires a greater delay or bandwidth to be transmitted which induces greater energy consumption.

According to some embodiments of the invention the other layer dedicated to transmission of at least one unicast or broadcast service is a LTE-Advanced layer.

According to some embodiments of the invention the broadcast layer dedicated to transmission of at least one broadcast service is a layer provided by a broadcast network, that is a network dedicated to the transmission of broadcast/multicast services. *"Dedicated"* means that the network is exclusively designed to provide broadcast/multicast services.

In addition the broadcast network may comprise HTHP transmitters and the broadcast layer may use at least one of the HTHP transmitters to transmit the push service data.

The broadcast layer may further be implemented and alternated in time division multiplexing with a DVB-T2 layer. When the other layer is a LTE-Advanced layer, the broadcast layer is hereafter called Tower Overlay over LTE-Advanced+ layer, TOoL+ layer.

Alternatively or in complement to the TOoL+ system, the two layers can be implemented by a classical LTE-Advanced network, where the broadcast layer dedicated to transmission of at least one broadcast service is an eMBMS layer and the other layer being a unicast layer is a LTE-A unicast layer.

A second aspect of the invention concerns a device configured to conduct a transmission of push service data to at least one user equipment in a network comprising a broadcast layer dedicated to transmission of at least one broadcast service and another layer dedicated to transmission of at least one unicast or broadcast service, comprising a processing module configured to:
- receive data relating to a network use;
- determine to perform or not perform a transmission of the push service data based on the received data;
- send instructions to a network entity, said instructions instruct to perform a transmission via the broadcast layer, to the at least one user equipment to be stored thereon.

A third aspect of the invention concerns a user equipment configured to access a network comprising a broadcast layer dedicated to transmission of at least one broadcast service and another layer dedicated to transmission of at least one unicast or broadcast service, comprising:
- a reception unit configured to receive, via the broadcast layer, push service data,
- a processing module which is configured to :
   ∘ identify the push service data received by the reception unit,
   ∘ store said push service data in the memory unit.

This enables the user equipment to determine that push service data is sent to it and to decode that data. The user equipment then stores this push service data in its memory unit.

According to some embodiments of the invention, where the user equipment further comprises a memory unit, the processing module of the user equipment is configured to provide the push service data stored in the memory unit, in response to a request. This enables to retrieve the push service data when it is requested. Indeed, the data is stored in the memory unit of the user equipment to avoid the network of having to transfer it to the user equipment when it is subsequently requested. For example, when the push service data is requested by an application (program, application program, operating system, a module of the application layer, a client in a client-server communication), the processing module detects this request and provides the push service data corresponding to the request.

According to some embodiments, the processing module is configured to store the data in a specific location of the memory unit recognized by an application (program, application program, operating system, a module of the application layer, a client in a client-server communication) of the user equipment which can require it. Thereby, when the application requires the data, it retrieves it from the specific location on the memory unit. For example, the push service data which is intended to be used by an internet browser can be stored in the temporary files of the internet browser.

According to some embodiments of the invention, the processing module is configured to erase the push service data stored in the memory unit after a predefined delay. This enables to free space in the memory unit and to enable new content to be stored according to the invention.

According to some embodiments of the invention, the processing module is configured to erase the push service data stored in the memory unit when the memory unit is filled above a predetermined level. This also enables to free space in the memory unit.

According to some embodiments of the invention, where the user equipment further comprises a battery unit which powers the user equipment, the processing module is configured to enable the reception unit to receive the push service data only if the battery unit is filled above a predetermined level or if a power cable is connected to the user equipment. This enables the reception only if the battery level is sufficient or if a power cable is connected to the user equipment to avoid consuming the user equipment's energy. Indeed, since the push service data are not requested and since the transmission of data can strongly affect the energy consuming of the user equipment, especially if the transmission parameters are set to a highly robust modulation and coding scheme, the energy level of the user equipment could be greatly and unpredictably affected which could reduce the maximum operating time between two electric recharges. For example, the processing module does not decode and the receiving unit is not active during the time allocated for the transmission of the push service data announced by the signaling information.

According to some embodiments of the invention, the processing module is configured to decode specific signaling information which announces the push service data. This enables the processing module to identify the push service data which is sent to the user equipment before receiving and decoding it. In this case no additional information is necessary along with the push service data for the processing module to identify the push service data received by the reception unit. In addition, the processing unit does not need to decode, or enable the decoder to decode, the push service data and the receiving unit are not active during the time allocated for the transmission of the push service data announced by the signaling information, if priority is given to energy saving like mentioned above or if the push service data is already stored, in case of retransmission.

A fourth aspect of the invention concerns a computer program product comprising code instructions to perform the method according to the first aspect when said instructions are run by a processor.

The present invention is illustrated by way of example, and not by way of limitation, in the figures of the accompanying drawings, in which like reference numerals refer to similar elements and in which:
- Figure 1 illustrates a Tower Overlay over LTE-A+ system representing a High Tower, High power (HTHP) transmitter covering many existing cellular towers;
- Figure 2 schematizes an architecture of a Tower Overlay over LTE-A+ network system, comprising a TOol+ layer and a LTE-Advanced/eMBMS layer;
- Figure 3 illustrates a flowchart representing the steps to perform a transmission via the broadcast layer of the push service data according to one embodiment of the invention;
- Figure 4 illustrates a flowchart representing the steps to receive the push service data through the broadcast layer, when no specific signaling information is implemented;
- Figure 5 illustrates a flowchart representing the steps to receive the push service data through the broadcast layer, when no specific signaling information is implemented;
- Figure 6 illustrates a structure of a decision entity according to some embodiments of the invention.

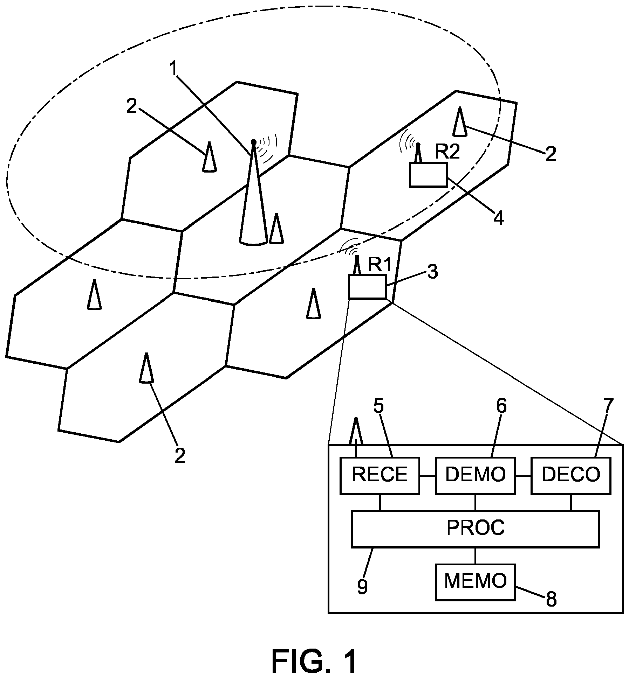

Referring to Figure 1, there is shown a Tower Overlay over LTE-Advanced (TOol+) system which comprises a High Tower, High Power (HTHP) transmitter 1 covering the coverage areas of many LTE cellular towers 2.

In this example the broadcast layer is a layer provided by a broadcast network which comprise at least one HTHP transmitter. In this example the HTHP transmitter may be used to transmit a signal comprising an LTE-Advanced part and a DVB-T2 part in time division multiplexing. As mentioned above we refer to such a broadcast layer through the LTE-Advanced part as a TOoL+ layer and the other layer is a LTE-Advanced layer.

Tower Overlay over LTE-Advanced (TOoL+) enables to offload data transmitted through mobile networks, especially live video or popular content, to broadcast networks. Therefore, the initial LTE-Advanced data containing popular content is sent through a HTHP transmitter 1 instead of a cellular tower. The User Equipment (UE) 3 - also referred as LTE-Advanced receiver - receives the data from the HTHP transmitter like if it was sent by the cellular tower 2 which covers the LTE cell in which the UE 3 is. This system enables to broadcast to all the UEs contained in many LTE cells covered by the HTHP transmitter 1, and therefore avoiding to distribute the popular content in many networks cells and possibly by several mobile network operators in parallel.

One relevant way of transmitting LTE-Advanced data through HTHP transmitter 1 is to use existing broadcast transmitter. This is made possible since TOoL+ supports a cooperative spectrum between DVB-T2 and LTE-Advanced, which is implemented with DVB-T2 super-frames including Future Extension Frames (FEF), enabling time domain spectrum sharing with LTE-Advanced wireless networks.

In this case LTE-Advanced data is transmitted through a signal in time division multiplexing. Thus, as it is signal time division multiplexing, specific DVB-T2 receiver 4 only decodes the regular DVB-T2 part of the signal and ignores the LTE-Advanced part of this hybrid signal. Conversely, specific LTE-Advanced receiver 3 only decodes the regular LTE-Advanced part of the signal included in the FEF and ignores the DVB-T2 part of the hybrid signal.

The LTE cellular towers 2 can as well be any cellular tower, such as eNodeBs, and the LTE-Advanced layer can be a layer of any communication standard dedicated to transmission of at least one unicast or broadcast service.

The specific DVB-T2 receiver 4 and the specific LTE-Advanced receiver 3 comprise a receiver 5, a demodulator 6, a decoder 7 and a memory unit 8 which are all controlled by a processing module 9. The memory unit 8 comprises a non-volatile unit which retrieves the computer program and a volatile unit which retrieves the signal transmission robustness scheme and/or a code rate scheme of the implemented FEC scheme and a sequence of modulation schemes.

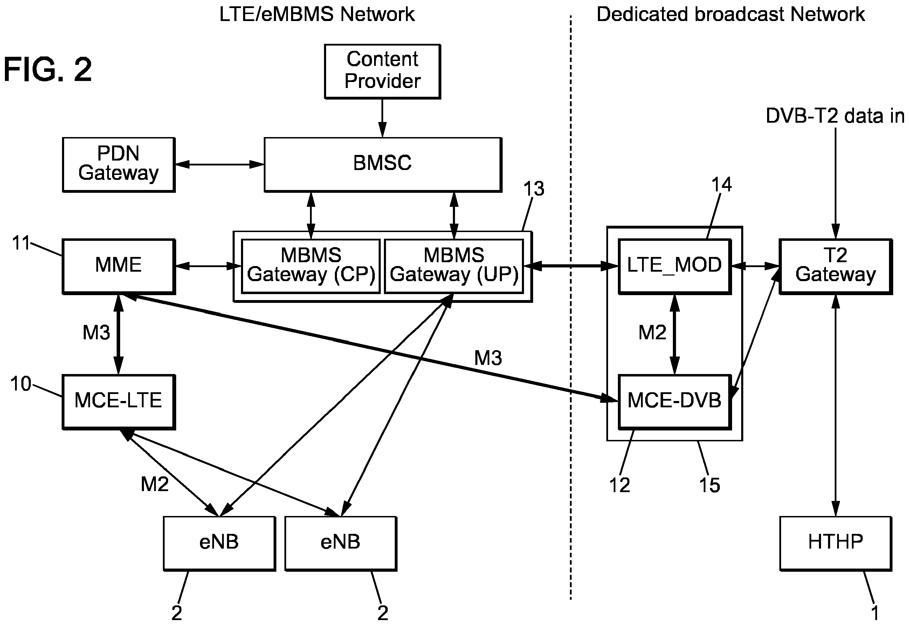

Referring to Figure 2, there is schematized an architecture of a Tower Overlay over LTE-A+ network system, according to some embodiments of the invention, comprising a dedicated broadcast network, which is a DVB-T2 network and a LTE-Advanced network, each of them providing respectively the TOoL+ layer and the LTE-Advanced layer.

The schematization of the architecture of the LTE-Advanced network is limited to the entities involved in a transmission through the eMBMS layer, for the sake of simplicity. These well-known entities in regard of the LTE-Advanced standard are the BMSC, the MBMS Gateway 13, the MME 11, the MCE (MCE-LTE 10) and the eNodeB (the LTE cellular towers 2). Regarding these embodiments of the invention, the MCE-LTE 10 entity can be seen as the decision entity.

The architecture of the DVB-T2 network is composed of a T2 Gateway and a HTHP transmitter 1. The Tower Overlay over LTE-Advanced system uses additional entities to transmit the LTE-Advanced data through time division multiplexing in the Future Extension Frames (FEF) of the DVB-T2 super-frames. Therefore between the dedicated broadcast network and the LTE-Advanced/eMBMS network two entities can be set:
- a LTE Modulator/eNB 14 entity which modulates the signal according to the data transmitted by the MBMS Gateway 13; and
- a MCE entity (MCE-DVB 12) which allocates resources for the transmission of the data through the HTHP according to the Future Extension Frames available.

Regarding these embodiments of the invention these two entities can be seen as the network entity 15.

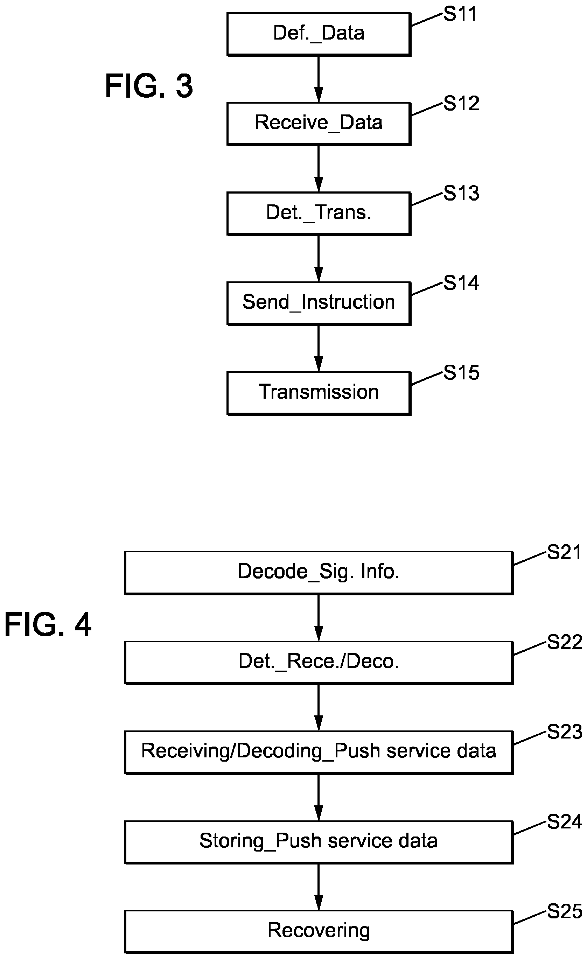

Referring to Figure 3, where the broadcast layer is a TOoL+ layer provided by the DVB-T2 network previously described in Figure 2 and the other layer is an LTE-Advanced layer provided by an LTE-Advanced network which architecture has been partly described in Figure 2.

At step S11, it is determined whether a specific data is determined as the push service data.

For example, the push service data can be set by determining a number of requests made by the user equipments to the LTE-Advanced network for a specific data. If the number of requests made during a predefined time is above a threshold then the specific data is determined as being the push service data. Alternatively, the push data can be selected according to a general popularity criterion.

At step S12, the MCE of the LTE-Advanced network (MCE-LTE 10) receives the data relating to a network use and determines according, for example the load of the DVB-T2 network providing the DVB-T2 layer.

Alternatively, the MCE-LTE 10 may receive the load of the DVB-T2 network and the load of the LTE-Advanced network.

Alternatively, the MCE-LTE 10 may receive the time of the day.

At step S13, the MCE-LTE 10 determines whether or not to perform a transmission of the push service data based on the received data.

For example the MCE-LTE 10 compares the load of the DVB-T2 network with a threshold, that may be predetermined, if this load is under the threshold then the MCE decides to perform the transmission of the push service data.

Alternatively, the MCE-LTE 10 compares the load of the DVB-T2 network with a first threshold and the load of the LTE-Advanced network with a second threshold. If the load of the DVB-T2 network is under the first threshold then the MCE 10 is configured to decide to perform the transmission of the push service data through the DVB-T2 network. If the load of the DVB-T2 network is above the first threshold and the load of the LTE-Advanced network is under the second threshold then the MCE is configured to decide to perform the transmission of the push service data through the LTE-Advanced network, on the eMBMS layer provided by this LTE-Advanced network. Alternatively, the transmission of the push service data through the LTE-Advanced network could be done through the unicast layer of the LTE-Advanced network, that is by transmitting to each user equipment the push service data in a unicast transmission. This alternative may be particularly relevant if the number of LTE-Advanced receivers to which the push service data is sent does not justify the use of eMBMS or in the case where the eMBMS layer of the LTE-Advanced network is limited. In practice, only up to 60% of the available LTE-A resources can be reserved for eMBMS services. Therefore, the unicast layer of LTE-Advanced can be combined the eMBMS layer if necessary. In this alternative the step of determining S13 encompasses the selection of the relevant layer.

Alternatively, with the embodiments where instructions sent to a network entity 15 instruct to perform a transmission via the broadcast layer, these instructions can instruct to perform a transmission via either the broadcast layer or the other layer depending on the received data relating to a network use. Therefore, this alternative method further comprises selecting a layer among the broadcast layer and the other layer based at least on the data relating to the network use. Thus, the instruction sent to the network instructs to perform a transmission via the selected layer.

These are examples of decision-making according to one or two parameters and one or several threshold, the invention is not limited to the described embodiments and can encompass other decision-making strategies.

Alternatively, the MCE-LTE 10 compares the time of the day with predetermined timetable, and according to the timetable, the MCE-LTE 10 decides whether or not to perform the transmission of the push service data. The timetable may include the periods of the day during which it is more relevant to send the push service data, for example during night time when energy is less expensive and the network is generally less loaded.

At step S14, the MCE-LTE 10 sends instructions to a network entity, said instructions instruct to perform a transmission via the broadcast layer, to the at least one user equipment to be stored thereon.

According to the decision taken at step S13 the MCE-LTE 10 may send instructions to perform a transmission of the push service data. When the MCE-LTE 10 determines to perform the transmission of the push service via the DVB-T2 layer provided by the DVB-T2 network, the MCE-LTE 10 sends these instructions to the MME 11. The MME 11 entity sends those instructions to the MCE-DVB 12 and to the MBMS Gateway 13 and BMSC. Thereon the MBMS Gateway 13 sends the push service data to the LTE_MOD 14.

Alternatively, if the MCE-LTE 10 decides to perform the transmission of the push service data through the LTE-Advanced network (unicast layer or eMBMS layer), then the MCE-LTE 10 is configured to inform the BMSC and MBMS Gateway 13 if the transmission is performed through the eMBMS layer or the PDN Gateway and a Serving Gateway if the transmission is performed through the unicast layer.

At step S15, the LTE_MOD 14 has the push service data and the MCE-DVB 12 has the instructions from the MCE-LTE 10. Thus MCE-DVB 12 can instruct the T2 Gateway to perform the transmission through the HTHP transmitter.

In case the transmission is carried out by the LTE network, the transmission is achieved according to the LTE standard.

In both cases, specific signaling information may be implemented to announce the push service data. This specific signaling information is transmitted through the control plane. Alternatively, only the usual signaling information is transmitted through the control plane. In this case, a flag data is included to the push service data to enable the processing module to identify the push service data received by the reception unit.

In addition, the instructions sent to the MCE-DVB 12 can further instruct a level of modulation and coding scheme to be used for the transmission. Therefore, MCE-DVB 12 can instruct the LTE_MOD 14 and the T2 Gateway to perform the transmission according to these transmission parameters.

In addition, the instructions from the MCE-LTE 10 can instruct to perform a periodical retransmission of the push service data, the instructions comprising the frequency of the retransmission. Thus, MCE-DVB 12 can instruct the T2 Gateway to perform a periodical retransmission of said frequency through the HTHP transmitter 1.

Referring to Figure 4, where the broadcast layer is TOoL+ layer provided by the broadcast network previously described in Figure 2 and the other layer is an LTE-Advanced layer provided by an LTE-Advanced network which architecture has been partly described in Figure 2.

At step S21, the receiver 5 receives the specific signaling information transmitted through the control plane of the TOoL+ layer or the LTE-Advanced layer, depending on the layer which transmit the push service data. The demodulator 6 demodulates the signaling information and the decoder 7 decodes the signaling information.

At step S22, the processing module 8 determines whether or not to receive the push service data. For example, the processing module 8, based on the signaling information, determines whether or not to receive the push service data. The processing module 8 may take into account the fact that the power cable is connected to the user equipment or the level of its battery or that the push service data is already stored. For example, if the battery level is under a predetermined threshold then the processing module determines to not receive the push service data.

The processing module 8 may also determine whether or not to receive the push service data based on a configuration of the user equipment. For example, based on a predetermined classification, the user equipment can be configured to receive only push service data which refers to specific categories of the classification.

At step S23, the processing module enables the receiver 5, the demodulator 6 and the decoder 7, to receive, demodulate and decode the push service data, provided that the processing module determines to receive the push service data. Otherwise, the receiver 5, demodulator 6 and decoder 7 would not be active during the time allocated for the transmission of the push service data announced by the signaling information. Thus, the user equipment saves energy.

At step S24, the processing module, which has identified the push service data due to the signaling information, stores it in the memory unit 8.

According to an alternative the processing module 9 stores the push service data in a specific location of the memory unit 8 recognized by an application (program, application program, operating system, a module of the application layer, a client in a client-server communication) of the user equipment which can require it. Thereby, when the application requires the data, it can retrieve it from the specific location in the memory unit. For example, the push service data which is intended to be used by an internet browser can be stored in the temporary files of the internet browser.

In addition, when storing the push service data in the memory unit 8 the processing module 9 can erase previously stored push service data. For example, if the memory unit 8 is filled above a predetermined level, the processing module 9 can erase the oldest push service data stored in the memory unit 8.

At step S25, when the push service data is requested the processing module recovers the push service data.

For example, when an application (program, application program, operating system, a module of the application layer, a client in a client-server communication) of the user equipment requests the push service data, the processing module transfers the push service data to the application.

According to an alternative, if the push service data is stored in a location of the memory unit recognized by the application, the application retrieves the push service data directly. For example, if the push service data is stored in the temporary files of an internet browser, when the internet browser requests the push service data, the data is directly retrieved by the internet browser.

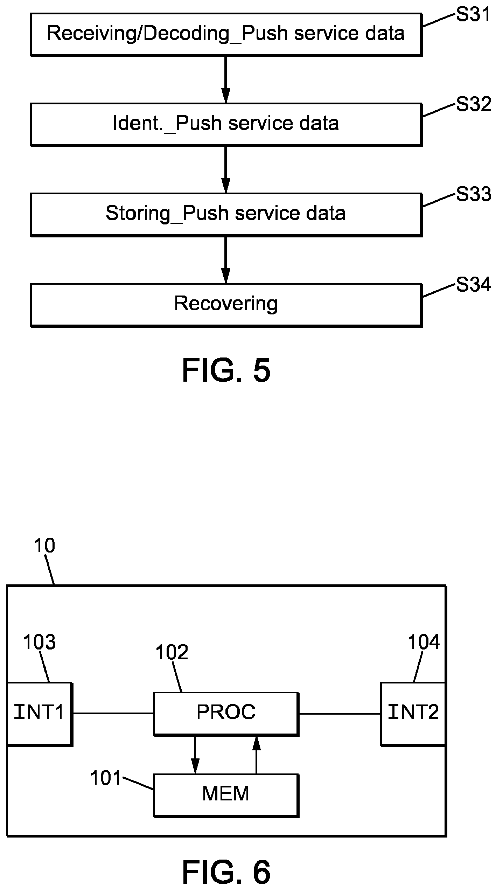

Referring to Figure 5, which illustrates an alternative embodiment of a method according to the invention, where the broadcast layer is a Tool+ layer provided by the DVB-T2 network previously described in Figure 2 and the other layer is an LTE-Advanced layer provided by an LTE-Advanced network which architecture has been partly described in Figure 2.

At step S31, the processing module controls the receiver 5, the demodulator 6 and decoder 7, to receive, demodulate and decode the push service data, provided that the usual signaling information informs the UE that data are sent to it and the resources allocated for this transmission.

At step S32, once the push service data is decoded, the processing module identifies the push service data due to the flag data included in it.

At step S33, the processing module, which has identified the push service data, stores it in the memory unit 8 the push service data.

According to an alternative, the processing module stores the push service data in a specific location of the memory unit, for further use by an application (program, application program, operating system, a module of the application layer, a client in a client-server communication) of the user equipment, which is arranged to retrieve it from the specific location. Thereby, when the application requires the data, the application can retrieve it from the specific location in the memory unit. For example, the push service data which is intended to be used by an internet browser can be stored in the temporary files of the internet browser.

At step S34, when the push service data is requested, the processing module retrieves the push service data.

For example, when an application (program, application program, operating system, a module of the application layer, a client in a client-server communication) of the user equipment requests the push service data, the processing module transfers the push service data to the application.

According to an alternative, if the push service data is stored in a location of the memory unit accessed by the application, the application retrieves the push service data directly. For example, if the push service data is stored in the temporary files of an internet browser, when the internet browser requests the push service data, the data is directly retrieved by the internet browser.

Figure 6 illustrates a structure of the MCE-LTE 10 which constitutes a decision entity according to some embodiments of the invention.

The MCE-LTE 10 comprises a random access memory 101 and a processor 102 that can execute code instructions to perform at least steps S13 and S14 as described above.

The random access memory 101, according to some embodiments, can store the instructions which are sent to the network entity 15. This enables to retrieve the instructions previously sent, to set and send adapting instructions only if they are relevant.

The MCE-LTE 10 may further comprise a first network interface 103 for communicating with the network entity 15. This can be an interface that is internal to the LTE-Advanced network in the case where the broadcast layer is the eMBMS layer, or the interface can be between the LTE-Advanced network and the broadcast network comprising the HTHP transmitter 1, in the case where the broadcast layer is provided by the broadcast network.

The MCE-LTE 10 may further comprise a second network interface 104 for communicating with the eNode B (cellular tower 2).

## Claims

1. A method implemented by computer means for transmitting push service data to at least one user equipment in a network comprising a broadcast layer dedicated to transmission of at least one broadcast service and another layer dedicated to transmission of at least one unicast or broadcast service, comprising :
- receiving data relating to a network use of the network (S12);
- determining to perform a transmission of the push service data based on the received data (S13);
- sending instructions to a network entity (15), said instructions instruct to perform a transmission of the push service data via the broadcast layer, to the at least one user equipment to be stored thereon (S14).

2. The method of claim 1, wherein data relating to a network use includes data related to a load of the broadcast layer, to a load of said another layer or to the time of the day.

3. The method of claim 1 or 2, further comprising:
- assessing a number of requests for a given content from several user equipments over the other layer, the other layer being dedicated to transmission of at least one unicast service;
- if said number is above a predetermined threshold, selecting said a given content as said push service data (S11).

4. The method of any one of claims 1 to 3, wherein said instructions further instruct to perform a periodical retransmission of said push service data.

5. The method of claim 4, further comprising, sending adapting instructions to the network entity, said adapting instructions instruct to adapt the periodical retransmission based on further data relating to a network use.

6. The method of any one of claims 1 to 5, wherein the instructions or the adapting instructions further instruct a level of modulation and coding scheme to be used for said transmission or for said retransmission, the modulation and coding scheme being instructed, by instructions or the adapting instructions, based on the data relating to the network use or on the further data relating to the network use, respectively.

7. The method according to any one of the previous claims, wherein the other layer dedicated to transmission of at least one unicast or broadcast service is a LTE-Advanced layer.

8. The method according to any one of the previous claims, wherein the broadcast layer dedicated to transmission of at least one broadcast service is a layer provided by a broadcast network.

9. The method according to claim 8, wherein the broadcast network transmits the push service data through at least one High Tower High Power, HTHP, transmitter.

10. The method according to claim 8 or 9, wherein the broadcast layer is alternated in time division multiplexing with a DVB-T2 layer in the broadcast network.

11. The method according to any one of claims 1 to 7, wherein the broadcast layer dedicated to transmission of at least one broadcast service is an eMBMS layer.

12. A device configured to conduct a transmission of push service data to at least one user equipment in a network comprising a broadcast layer dedicated to transmission of at least one broadcast service and another layer dedicated to transmission of at least one unicast or broadcast service, comprising a processing module (102) configured to:
- receive data relating to a network use (S12);
- determine to perform or not perform a transmission of the push service data based on the received data (S13);
- send instructions to a network entity, said instructions instruct to perform a transmission via the broadcast layer, to the at least one user equipment to be stored thereon (S14).

13. A user equipment configured to access a network comprising a broadcast layer dedicated to transmission of at least one broadcast service and another layer dedicated to transmission of at least one unicast or broadcast service, comprising:
- a memory unit (8),
- a reception unit (5) configured to receive, via the broadcast layer, push service data,
- a processing module (9) which is configured to :
- identify the push service data received by the reception unit (5),
- store said push service data in the memory unit (8).

14. A user equipment according to claim 13, wherein the processing module (9) is further configured to provide the push service data stored in the memory unit (8), in response to a request.

15. A user equipment according to claim 13 or 14, wherein the processing module (9) is further configured to erase said push service data stored in the memory unit (8) after a predefined delay.

16. A user equipment according to any one of claim 13 to 15, wherein the processing module (9) is further configured to erase said push service data stored in the memory unit (8) when said memory unit (8) is filled above a predetermined level.

17. A user equipment according to any one of claim 13 to 16, said user equipment further comprising a battery unit which powers the user equipment (3), wherein the processing module (9) is further configured to enable the reception unit to receive the push service data only if the battery unit is filled above a predetermined level or if a power cable is connected to the user equipment (3).

18. A user equipment according to any one of claim 13 to 17, wherein the processing module (9) is configured to decode specific signaling information which announces the push service data.

19. Computer program product comprising code instructions to perform the method according to any one of claims 1 to 12, when said instructions are run by a processor.
